(19) Europäisches Patentamt
European Patent Office
Office européen des brevets

(11) **EP 1 159 309 B1**

(12) **EUROPEAN PATENT SPECIFICATION**

(45) Date of publication and mention
of the grant of the patent:
**02.09.2009 Bulletin 2009/36**

(51) Int Cl.:
***C08F 8/00*** *(2006.01)*  ***C08L 23/26*** *(2006.01)*
***C08J 9/04*** *(2006.01)*  ***B29C 44/50*** *(2006.01)*

(21) Application number: **99943501.9**

(22) Date of filing: **18.06.1999**

(86) International application number:
**PCT/NO1999/000209**

(87) International publication number:
**WO 2000/000520 (06.01.2000 Gazette 2000/01)**

(54) **FOAMED POLYPROPYLENE**

GESCHÄUMTES POLYPROPYLEN

POLYPROPYLÈNE EXPANSÉ

(84) Designated Contracting States:
**AT BE CH DE DK FI FR GB IT LI SE**

(30) Priority: **19.06.1998 NO 982882**

(43) Date of publication of application:
**05.12.2001 Bulletin 2001/49**

(73) Proprietor: **BOREALIS A/S**
**2800 Lyngby (DK)**

(72) Inventors:
• **BORVE, Kjetil, L.**
**N-3280 Tjodalyng (NO)**
• **ROMMETVEIT, Kari**
**N-3950 Brevik (NO)**
• **HELLAND, Kristian**
**N-3960 Stathelle (NO)**

(74) Representative: **Kador & Partner**
**Corneliusstrasse 15**
**80469 München (DE)**

(56) References cited:
WO-A1-94/05707          WO-A1-97/49759
WO-A1-99/27007          GB-A- 1 566 056
US-A- 4 916 165          US-A- 5 082 869
US-A- 5 416 169          US-A- 5 447 985

• **MASATAKA SUGIMOTO ET AL: '"Effect of Chain Structure on the Melt Rheology of Modified Polypropylene"' JOURNAL OF APPLIED POLYMER SCIENCE, vol. 73, 1999, pages 1493 - 1500, XP002921905**

**Description**

TECHNICAL FIELD

This invention relates to a continuous process for the chain branching and foaming of polypropylene resins, and the use thereof.

BACKGROUND AND PRIOR ART

Polypropylenes are gaining applications in existing and new market areas mainly due to their excellent cost to performance ratio. Many efforts have been made to modify polypropylene resins to give them desired properties, for instance by grafting specific compounds onto the polymer backbone, by crosslinking, and by blending with other polymers. One drawback of many polypropylene resins is their low melt strength, which is at least partly due to insufficient branching, and such polypropylenes cannot be foamed into useful low density foams.

US 5,047,485 discloses a process for the preparation of solid, gel-free polypropylene resins having increased branching and strain hardening elongational viscosity. A linear polypropylene resin in the form of a solid state fluidized bed is mixed with a peroxide and preferably heated in a stream of hot nitrogen at a temperature up to 120 °C for a period of time sufficient to obtain a significant amount of branching.

WO 94/05707 discloses a process for the modification of linear or branched propylene (co)polymers containing not more than 5 % by weight of ethylene. Branching is introduced by reacting this resin at a temperature above 120 °C with a peroxide containing an activated unsaturated group. A particularly preferred peroxide is tert-butylperoxy-n-butylfumarate. The molecular weight of the modified resin may be influenced by the use of a coagent.

GB 1,566,056 discloses a process for the simultanous crosslinking, extrusion and foaming of branched polyolefins, in particular polypropylene and polybutene-1. The polyolefin mixed with a conventional peroxide is heated in an extruder for a period equal to at least one half of the half-life of the peroxide, then a liquefied gas acting as a foaming agent is injected, the mixture is extruded through an extrusion die into ambient atmosphere to expand the extrudate.

US 5,082,869 relates to a foamed material obtained by feeding a not crosslinked polypropylene and a co-agent into a twin screw extruder wherein they are mixed and melted, and at a distance equal to 2/3 of the extruder length from the main inlet opening crosslinking and foaming agents are introduced into the molten material, which upon extrusion through a die expands into a foamed material having densities of 200 to 400 kg/m$^3$.

An object of the present invention is to provide a simple, continuous, commercially applicable process by which polypropylene resins can be branched and foamed into useful materials.

SUMMARY OF THE INVENTION

The present invention provides in a first aspect a process for the branching of a polypropylene resin being performed continuously in an extruder, comprising:

(i) mixing the polypropylene resin with a peroxide, and also a crosslinking agent, which peroxide is selected from the group comprising the structures represented by the following formulae (1) and (2); and mixtures thereof:

$$R_1\text{-O-O-C(O)-C=C-C(O)-O-O-}R_2 \qquad (1)$$

wherein each $R_1$ and $R_2$, equal or different, represents alkyl groups having 1 to 15 carbon atoms, and which are branched or not,
(ii) heating the constituents to a temperature higher than the melting temperature of the polypropylene resin and the decomposition temperature of the peroxide, while they are being mixed and conveyed forward,
(iii) keeping the polymer melt at said temperature for a period of at least 3 and until 100 times the half-life of the peroxide at said temperature, and
(iv) extruding the reacted polymer melt through an extrusion die into ambient atmosphere,

wherein the process is carried out in an inert atmosphere and wherein as a crosslinking agent a compound selected from the group of tri(alkyl allyl) cyanurates or tri(alkyl allyl) isocyanurates is used.

Further, the present invention also provides a process for the foaming of a polypropylene resin, being performed continuously in an extruder, comprising steps (i) to (iii) above and in addition the following steps:

(iv) introducing a foaming agent, optionally also a bubble initiator, into the polymer melt inside the extruder barrel at a position where the branching is substantially complete, and

(v) extruding the processed polymer melt through an extrusion die into ambient atmosphere, whereupon the polymer composition expands.

DETAILED DESCRIPTION OF THE INVENTION

The preferred polymer resins to be used in the present process are polypropylene resins. However, in principle any extrudable α-olefin polymer may be used. The term "polypropylene" or "polypropylene resins", as used herein, includes all types of propylene polymers, such as propylene homopolymers and copolymers, as well as blends and alloys containing polypropylenes as the major part. Particularly preferred polypropylenes are selected from the group comprising polypropylene homopolymers; copolymers of propylene with ethylene, containing from 0.1 to 25 % by weight of ethylene; blends of polypropylene with polyethylenes such as high density polyethylene (HDPE), low density polyethylene (LDPE), linear low density polyethylene (LLDPE); ethylene propylene rubbers (EPR); and alloys of polypropylene with another thermoplastic polymer selected from the group comprising polyamides (PA), polyethylene terephthalates (PET), polybutylene terephthalates (PBT), polycarbonates (PC) and polystyrenes (PS). Polypropylene blends or alloys may contain the second polymer component in an amount from 0.1 to 40 % by weight based on the weight of the polymer composition. The polypropylene, or main polypropylene component, should have a melt flow index from 0.2 to 500 g/10 min (determined at the conditions 230 °C/2.16 kg according to ASTM D 1238).

The peroxide employed in the present process shall induce chain branching of the polymer resin and thus broaden its molecular weight distribution (MWD). The peroxide must not cause any substantial amount of β-scissions in the polypropylene backbone, which inevitably will reduce the average molecular weight (Mw) of the polypropylene resin. The peroxide must decompose when exposed to a temperature range which is common in polypropylene extrusions. The half-life of the peroxide has to be shorter than the residence time of the melted resin in the extruder. Consequently, specific peroxides satisfying the above mentioned requirements have to be used.

The peroxides are selected from the group comprising those represented by the following formula (1):

$$R_1\text{-O-O-C(O)-C=C-C(O)-O-O-}R_2 \qquad (1)$$

wherein each $R_1$ and $R_2$, equal or different, represents alkyl groups having 1 to 15 carbon atoms, and which may be branched or not. Preferred peroxides of formula (1) are selected from the group comprising slightly branched alkyl fumarates. A particularly preferred peroxide is tert-butylperoxy-n-butylfumarate (TBPNBF), which has a half-life of about 6 minutes at 148 °C and about 30 seconds at 180 °C.

A preferred level of peroxide used by the present process is from 0.001 to 10 %, preferably from 0.1 to 5 %, more preferably from 0.5 to 2 %, based on the weight of the polypropylene resin.

Any mixture of the different peroxides having the general formulae (1) above and (2) being

$$R_3\text{-}R_5\text{-O-C(O)-O-O-C(O)-O-}R_6\text{-}R_4 \qquad (2)$$

wherein each $R_3$ and $R_4$, equal or different, represents alkyl groups having 1 to 15 carbon atoms, and which are branched or not, and each $R_5$ and $R_6$, equal or different, represents cyclic or linear aliphalic groups having 6 carbon atoms, may also be used.

The peroxides will upon heating decompose into free radicals which, by a certain reaction mechanism, will induce reactive sites on the polymer backbone, leading to the formation of branching. When using peroxides of the alkyl fumarate class (peroxides of formula (1)) the carbon-carbon double bond is expected to contribute to the mentioned mechanism and the resulting formation of branching by a "combination" of polyolefin chains. When using peroxides of the dialkyl peroxydicarbonate class (peroxides of formula (2)) the peroxides are believed being "grafted" onto the polyolefin chains, eventually leading to the formation of branching.

A crosslinking agent is added to the system to enhance branching. The crosslinking agents are selected from the group comprising tri(alkyl allyl) cyanurates and tri(alkyl allyl)isocyanurates. A preferred level of crosslinking agent used by the present process is from 0.01 to 10 %, preferably from 0.1 to 5 %, by weight based on the weight of the polypropylene resin. The crosslinking agent is expected to function as a junction between polymer chains, thus resulting in branching.

Neighbouring chains on separate polymer molecules may also combine and thereby crosslink the polymer. However, recombinations of polymeric species must not occur in such an extent that there will be a substantial degree of crosslinking between the chains resulting in a significantly impoverished processability.

The introduced changes in the molecular structure will change the rheological properties of the polymer. One way of expressing such changes is to perform rheological measurements in a rheometer and compare the obtained tan (G*=3) values for a modified and unmodified polymer. The property

$$\tan(G^*=3), \text{ where } G^* = -(G')^2 + (G'')^2$$

is calculated from the storage and loss modules as a function of shear rate. The lower the value of tan(G*), the higher is the extent of branching. Branching is believed to lead to an increased entanglement of the polymer chains, and this will increase the melt strength of the resin when being extruded. Consequently, a low tan(G*) indicates a high melt strength.

Experiments show that the extrusion of a polypropylene mixed with a peroxide of formulae (1) above will result in a final resin having a reduced tan(G*) value. In contrast, most of the peroxides commonly employed in plastic processing will increase the value of tan(G*), which indicates that the polymer chains have been degradeded rather than branched. Therefore, it is critical to selected a suitable type of peroxide, and it is important that the free radicals formed do not cause degradation by β-scissions of the polymer backbone.

Another way of expressing such rheological changes is a direct measurement of the melt strength of the polymer by a so-called "haul-off" method. This method is common in thermoplastic testing. Therefore, only a brief summary of the method to give a necessary understanding of its principles will be given. The polymer to be tested is extruded through a capillary die vertically downward. The formed thread is pulled downward by a weight connected to a scale recording the pulling force. This method makes it possible to measure the melt strength of the polymer thread in a molten state just outside the capillary die. The extruded solidified thread is hauled off by the use of a pair of nip rollers. The measured melt strength will vary with the haul off speed. Details are given in the examples. A high "haul off" force indicates an improved melt strength.

The foaming agent may be any physcial or chemical foaming agent. Examples of physical blowing agents comprise: carbon dioxide ($CO_2$); various hydrocarbons, in particular alkanes having 1 to 8 carbon atoms, preferably methane, ethane, propane, butane, isobutane (2-methylpropane), pentane, isopentane (methylbutane) and neopentane (2,2-dimethylpropane), most preferably isobutane and pentane; water ($H_2O$); chloro-fluorocarbons (CFC); and mixtures thereof. Examples of chemical blowing agents comprise: inorganic carbonates, citric acid and azodicarbon amides, and mixtures thereof.

A bubble initiator can be employed to improve the foam structure. Such an initiator can be any solid that will initiate the formation of bubbles from an introduced gasous or gas precursor compound. Thus, a bubble initiator can be selected among inorganic compounds, such as talc, and organic compounds, such as azodicarbonamides and citric acid. An introduced chemical blowing agent can also itself function as a bubble initiator.

The density of the foamed polypropylene resin will depend on various factors. Important is the degree of entanglement of the polymer chains, i.e. the degree of branching and/or crosslinking. If a greater amount of peroxide is mixed in during extrusion, this will result in a desired lower foam density and reduced average bubble size. Moreover, the type and amount of foaming agent used will influence the foam structure. For example, $CO_2$ will normally result in a higher foam density and larger foam bubbles than what is achieved when using isobutane. By the present invention the foam density and average bubble size can be desirely varied by selecting appropriate processing parameters. A person skilled in the art having learned the principles of this invention will know after having performed some experimental runs how to obtain the desired foam density.

Common additives, such as fillers, pigments, stabilisers, flame retardants, may be added to the resins used in the present process. In general, such additives will normally not have any influence on the branching reactions. They may however enhance the polymer properties and foaming performance.

The process of obtaining branching and foaming according to the present invention is performed in a continuous manner by the use of a suitable extruder. All ordinary, commercially available single and double screw extruders suitable for polypropylene extrusions may be used. Depending on the type of peroxide used, a vented extruder may be required. In general, all constituents except the foaming agents, i.e. the polyolefin resin, the peroxide, any additives and the crosslinking agent, may be fed to the extruder together or as separate streams to the same inlet opening. Most conveniently, all components are fed to the same hopper and mixed therein by means well known in the art. However, it may be necessary to premix the peroxide into the resin to be sure that it be evenly distributed in the resin. The foaming agent will normally be introduced into the extruder barrel at a point in a distance of between 10 D and 30 D downstream from the hopper (where D is the diameter of the extruder barrel).

The extruder will provide an intimate mixing of the peroxide with the resin while the resin being subjected to melting and heating to a desired temperature. The selected peroxide must decompose at an acceptable rate at this particular temperature. The temperatures in the polymer melt in the mixing and metering zones of the extruder are preferably within the range of 120 °C to 250 °C, more preferably from 130 °C to 230 °C, most preferred from 140 °C to 210 °C. Chosen temperatures will depend on the type of polypropylene resin used and the specific conditions selected for foaming. The residence time of the melted resin inside the extruder must be sufficient to ensure the completion of the branching reactions, as well as sufficient mixing and distribution of the foaming agent(s). Consequently, the residence times will be closely linked to the temperature of the polymer melt, the half-life temperature of the peroxide and the type of foaming agent(s) used. In general, the dwell time should not be shorter than 3 times the half-life of the peroxide used. When the residence times are longer than 100 times the half-life of the peroxide no further increase in branching will normally be observed. Preferably, the residence time of the polymer resin inside the extruder is from 2 to 50 times the half-life of the peroxide at the actual melt temperature.

The present process is carried out in an ambient atmosphere, but none the less an inert atmosphere, e.g. a nitrogen atmosphere, inside the extruder is used because this favours the branching.

According to one embodiment of the invention, the branched polypropylene is extruded without any foaming agent be added. The melted material will normally be extruded for example as strands which in an expedient manner are cooled and granulated. The obtained resin granules may be used as such in common thermoplastic processing, such as injection molding, extrusion coating, pipe extrusion, thermoforming, blow molding, calandering, fibre spinning.

According to a preferred embodiment of the invention, a foaming agent is introduced into the extruder barrel at a position where at least a substantial part of the polymer material has been branched. Also in this case the polymer melt can be extruded at ambient conditions. The extrudate, for example strands, will then expand. The obtained foamed strands are cooled and may be granulated as mentioned above. The produced foamed resin granules (foamed beads) may be used as such in secondary plastic processing. Another option is to shape the foamed extrudate directly into desired foamed products, like monolayer or multilayer sheets, profiles, tubes, or other shapes. These semifinished foamed products may be used as such or in further plastic manufacturing, for example in thermoforming, lamination, or for other purposes.

The invention will now be illustrated and described in greater details by examples.

**EXAMPLES**

Determination of physical Properties

Rheological properties were determined by the use of an oscillating rheometer, "Rheomterics RDA II" (trademark). The following test conditions were used: a capillary rheometer piston speed of 1 mm/min, a die geometry of 16:1, and a temperature of 190°C. The melt strength was determined by comparing the measured tan($G^*$=3) value of the sample with the corresponding value of a reference (unmodified) sample, as explained above.

Melt strength was determined by the above-mentioned "haul-off" method by using a capillary rheometer apparatus available under the trademark "Rosand RH07". The polymer sample was conditioned for 10 minutes before extrusion. The haul off speed of the solidified extruded monofilament ranged from 2 to 50 m/min. At a given speed a higher recorded force indicates a higher melt strength.

The foam density was determined by weighing a sample, measuring the displaced volume of the sample in a high accuracy measuring cylinder, and then divide the weight by volume.

The average cell (bubble) sizes were determined by counting manually the number of cells on a Scanning Electron Microscopy (SEM) picture of the cross-section of an extruded strand.

**Example 1** (Reference example)

This example relates to the branching of a propylene/ethylene copolymer by the use of a peroxide of formula (1). A random propylene-ethylene copolymer containing 2 % by weight of ethylene (polymer grade designated RD-1), having a melt index of MFI=8 (230 °C/2.16 kg, determined according to ASTM D 1238), was premixed with 1 % by weight of tert-butylperoxy-n-butylfumarate (TBPNBF), which has a half-life of 30 seconds at 180 °C. This premix was extruded in an ordinary twin screw extruder of type "Clextral BC 21" (trademark) having corotating intermeshing screws, a barrel diameter of D=25 mm and a screw length, L, equal to L/D=44. The set temperature profile resulted in a melt temperature at the sieve of approximately 180 °C. The screw speed was 150 rpm, resulting in a polymer resin dwell time of 8 times the half-life of the peroxide at 180 °C. The polymer melt was extruded as strands into a water bath, dried and comminuted into granules. Rheological measurements on the obtained resins, represented by tan($G^*$=3), are reported in Table 1.

**Example2 (comparative example)**

The procedure of example 1 was followed, except that 0.8 % by weight of tert.-butyl peroxybenzoate was added (commercially available from Akzo Nobel Chemicals bv under the trade name "Trigonox C"). (A concentration of 0.8 wt% Trigonox C corresponds to 1 wt% TBPNBF calculated on the basis of the active oxygen content). The measured tan($G^*$=3) is reported in Table 1.

**Example 3 (comparative example)**

The procedure of example 1 was followed, except that no peroxide was used (control sample). The measured tan(G*=3) is reported in Table 1.

**Table 1**

| Resin RD-1, twin screw extruder | | | |
|---|---|---|---|
| Ex. No. | Peroxide | Peroxide conc. (%wt) | tan(G*=3) |
| 1 Ref. | TBPNBF | 1 | 0.54 |
| 2 comp. | Trigonox C | 0.8 | 1.7 |
| 3 comp. | none | 0 | 1 |

**Example 4 (Reference example) and Example 5 (comparative example)**

The procedure of example 1 was repeated, except that a single screw extruder of type "Brabender" (trademark) having a diameter of D=30 mm and a length of L/D=26 was used The screw speed was 30 rpm, and the average melt temperature in the die zone was 180 °C. The residence time in the extruder was about 3 minutes. Example 4 was performed with the peroxide TBPNBF, and example 5 was performed without any peroxide. Rheological properties represented by tan(G*=3) are reported in table 2.

**Table 2**

| Resin RD-1, single screw extruder (D=30 mm) | | | |
|---|---|---|---|
| Ex. No. | Peroxide | Peroxide conc. (%wt) | tan(G*=3) |
| 4 Ref. | TBPNBF | 1 | 0.27 |
| 5 comp. | none | 0 | 1 |

**Examples 6 to 8 (Reference example)**

These examples relates to the branching of a polypropylene homopolymer in a double screw extruder. The procedure of example 1 was repeated, except that the polymer resin used was a polypropylene homopolymer (polymer grade designated HO-1) having a melt index of MFI=3. The peroxide levels used were as indicated in table 3 below. Determined rheological properties represented by tan(G*=3) are reported in table 3.

**Examples 9 and 10 (comparative example)**

The procedure of examples 6 to 8 was followed, except that in example 9 was used 0.4 wt% of Triganox C and in example 10 no peroxide was used. Determined rheological properties represented by tan(G*=3) are reported in table 3.

**Table 3**

| Resin HO-1, twin screw extruder (D=25mm) | | | |
|---|---|---|---|
| Ex. No. | Peroxide | Peroxide conc. (%wt) | tan(G*=3) |
| 6 Ref. | TBPNBF | 0.5 | 0.76 |
| 7 Ref. | TBPNBF | 1 | 0.58 |
| 8 Ref. | TBPNBF | 2 | 0.36 |
| 9 comp. | Triganox C | 0.4 | 2.2 |
| 10 comp. | none | 0 | 1 |

**Example 11 (Comparative example)**

This example relates to the branching of a polypropylene homopolymer by the use of a peroxide of formula (2) and crosslinking.

A propylene homopolymer (polymer grade designated HO-2) having a melt index of MFI=2 was premixed with 1.25 % by weight of dicetyl peroxydicarbonate (DCPDC), which has a half-life of about 1 second at 140 °C. This premix was extruded in the twin screw extruder used in example 1. The set temperature profile resulted in a melt temperature at the sieve of approximately 180 °C. The screw speed was 150 rpm, resulting in a polymer resin dwell time of 8 times the half-life of the peroxide at 180 °C. The polymer melt was extruded as strands into a water bath, dried and comminuted into granules. Rheological properties represented as melt strength measured by haul-off are reported in table 4.

**Examples 12 to 14 (Comparative example)**

The procedure of example 11 was repeated, except that in addition it was added from 0.1, 0,98 and 3.04 % by weight, respectively, of triallyl cyanurate (TAC) to act as a crosslinking agent. Rheological properties represented as melt strength measured the haul-off test method are reported in table 4.

**Example 15 (comparative example)**

Example 3 was repeated, except that no peroxide was added. Rheological properties represented as melt strength measured by haul-off are reported in table 4.

**Table 4**

| Resin HO-2, twin screw extruder (D=25mm) | | | | | |
|---|---|---|---|---|---|
| Ex. No. | Peroxide type | Peroxide %wt | Cross-linking agent type | Cross-linking agent %wt | Haul off force g |
| 11 comp. | DCPDC | 1.25 | none | 0 | 2.5 |
| 12 comp. | DCPDC | 1.25 | TAC | 0.10 | 2.8 |
| 13 comp. | DCPDC | 1.25 | TAC | 0.98 | 3.3 |
| 14 comp. | DCPDC | 1.90 | TAC | 3.04 | 3.7 |
| 15 comp. | none | 0 | none | 0 | 1.1 |

**Example 16 (Comparative example)**

This example relates to the branching and foaming of a polypropylene homopolymer.

The procedure of example 11 was followed, except that the concentration of dicetyl peroxydicarbonate (DCPDC) was 0.50 % by weight. In addition 5.0 % by weight of $CO_2$ as a foaming agent was introduced, and 1.0 % by weight of azodicarbonamide as a bubble initiator. The foaming agent was introduced into the extruder in a position located 18 D downstream of the first inlet point of the extruder. The foam density and foam average cell size were measured. The obtained results are reported in table 5.

**Example 17 (Comparative example)**

The procedure of Example 16 was repeated, except that the foaming agent used was isobutane. The results are reported in Table 5.

**Example 18 (comparative example)**

The procedure of Example 17 was repeated, except that the amount of DCPDC was increased to 1.25 % by weight. The results are reported in Table 5.

**Example 19 (comparative example)**

Example 16 was repeated, except that no peroxide was added. The results are reported in table 5.

**Table 5**

| Resin HO-2, twin screw extruder (D=25mm) | | | | | | |
|---|---|---|---|---|---|---|
| Ex. No. | Peroxide | Peroxide conc. (%wt) | Foaming agent | Foaming agent conc. (%wt) | Foam density (kg/m$^3$) | Average cell size ($\mu$m) |
| 16 comp. | DCPDC | 0.50 | $CO_2$ | 5.0 | 175 | 125 |
| 17 comp. | DCPDC | 0.50 | iso-butane | 5.0 | 150 | 90 |
| 18 comp. | DCPDC | 1.25 | iso-butane | 5.0 | 90 | 65 |
| 19 comp. | none | 0 | $CO_2$ | 5.0 | 400 | 300 |

**Claims**

1. A process for the branching of a polypropylene resin, **characterised by** being performed continuously in an extruder, comprising:

   (i) mixing the polypropylene resin with a peroxide and also a crosslinking agent, which peroxide is selected from the group comprising the structures represented by the following formula (1):

   $$R_1\text{-O-O-C(O)-C=C-C(O)-O-O-}R_2 \qquad (1)$$

   wherein each $R_1$ and $R_2$, equal or different, represents linear or branched alkyl groups having 1 to 15 carbon atoms,
   (ii) heating the constituents to a temperature higher than the melting temperature of the polypropylene resin and the decomposition temperature of the peroxide while being mixed and conveyed forward,
   (iii) keeping the polymer melt at said temperature for a period of at least 3 and until 100 times the half-life of the peroxide at said temperature,
   (iv) extruding the reacted polymer melt through an extrusion die into ambient atmosphere,

   wherein the process is carried out in an inert atmosphere and
   wherein as a crosslinking agent a compound selected from the group of tri(alkyl allyl) cyanurates or tri(alkyl allyl) isocyanurates is used.

2. A process for the branching and foaming of a polypropylene resin, **characterised by** being performed continuously in an extruder, comprising:

   (i) mixing the polypropylene resin with a peroxide and also a crosslinking agent, which peroxide is selected from the group comprising the structures represented by the following formula (1) and mixtures thereof:

   $$R_1\text{-O-O-C(O)=C-C(O)-O-O-}R_2 \qquad (1)$$

   wherein each $R_1$ and $R_2$, equal or different, represents linear or branched alkyl groups having 1 to 15 carbon atoms,
   (ii) heating the constituents to a temperature higher than the melting temperature of the polypropylene resin and the decomposition temperature of the peroxide while being mixed and conveyed forward,
   (iii) keeping the polymer melt at said temperature for a period of at least 3 and until 100 times the half-life of the peroxide at said temperature,
   (iv) introducing a foaming agent, optionally also a bubble initiator, into the polymer melt inside the extruder barrel at a position where the branching is substantially complete,
   (v) extruding the processed polymer melt through an extrusion die into ambient atmosphere, whereupon the polymer composition expands,

   wherein the process is carried out in an inert atmosphere, and
   wherein as a crosslinking agent a compound selected from the group of tri(alkyl allyl) cyanurates or tri(alkyl allyl) isocyanurates is used.

3.  The process of claims 1 or 2, **characterised in that** the polypropylene resin is selected from the group comprising polypropylene homopolymers; copolymers of propylene with 0.1 % to 25 % by weight of ethylene; blends of propylene homopolymers or copolymers with high density polyethylene, low density polyethylene, linear low density polyethylene or ethylene propylene rubbers; and alloys of propylene homopolymers and copolymers with other thermoplastic polymers selected from the group of polyamide and thermoplastic polyester resins; where the level of the second polymer in the blends or alloys is in the range of from 0.1 to 40 % by weight of the polymer composition.

4.  The process of claims 1 or 2, **characterised in that** the residence time of the polymer resin inside the extruder is from 3 to 50 times the half-life of the peroxide at the actual melt temperature.

5.  The process of claims 1, 2 or 3, **characterised in that** an amount of peroxide in the range of from 0.001 % to 10 % based on the weight of the polypropylene resin is used.

6.  The process of any of claims 2 to 5, **characterised in that** the peroxide is tert-butyl-peroxy-n-butylfumarate.

7.  The process of claim 6, **characterised in that** an amount of crosslinking agent in the range of from 0.01 % to 10 % based on the weight of the polypropylene resin is used.

8.  The process of claim 2, **characterised in that** the foaming agent is selected from the group comprising physical and chemical foaming agents, and mixtures thereof.

9.  The process of claim 8, **characterised in that** the foaming agent is selected from the group comprising carbon dioxide, alkanes having 1 to 5 carbon atoms, nitrogen, water and chloro-fluorocarbons, and mixtures thereof.

10. The process of claim 9, **characterised in that** the foaming agent is $CO_2$ or isobutane.

11. The process of claims 2 to 10, **characterised in that** the bubble initiator is selected from the group comprising inorganic carbonates, citric acid and azodicarbon amides, and mixtures thereof.

12. A use of the polymer resins obtained by the process of any of claims 1 and 3 to 6, in manufacturing articles by injection molding, extrusion coating, pipe extrusion, thermoforming, blow molding, calandering and fibre spinning.

13. A use of the polymer resins obtained by the process of claims 2 to 11, in manufacturing articles by pipe extrusion, thermoforming and blow molding.

**Patentansprüche**

1.  Verfahren zum Verzweigen eines Polypropylenharzes, **dadurch gekennzeichnet, daß** es kontinuierlich in einem Extruder durchgeführt wird, das folgendes umfaßt:

    (i) Mischen des Polypropylenharzes mit einem Peroxid und auch einem Vernetzungsmittel, wobei das Peroxid aus der Gruppe ausgewählt ist, die Strukturen der folgenden Formel (1) umfaßt:

    $$R_1\text{-O-O-C(O)-C=C-C(O)-O-O-}R_2 \qquad (1)$$

    worin $R_1$ und $R_2$, die gleich oder verschieden sind, jeweils für lineare verzweigte Alkylgruppen mit 1 bis 15 Kohlenstoffatomen stehen,
    (ii) Erwärmen der Bestandteile auf eine Temperatur oberhalb der Schmelztemperatur des Polypropylenharzes und der Zersetzungstemperatur des Peroxids, wobei sie gemischt und vorwärts transportiert werden,
    (iii) Halten der Polymerschmelze bei dieser Temperatur für einen Zeitraum von mindestens dem 3- und bis zum 100-fachen der Halbwertszeit des Peroxids bei dieser Temperatur,
    (iv) Extrudieren der reagierten Polymerschmelze durch eine Extrusionsdüse in die umgebende Atmosphäre,

    wobei das Verfahren in einer inerten Atmosphäre erfolgt, und
    wobei als Vernetzungsmittel eine Verbindung verwendet wird, die aus der Gruppe von Tri(alkylallyl)cyanuraten oder Tri(alkylallyl)isocyanuraten ausgewählt ist.

**2.** Verfahren zum Verzweigen und Schäumen eines Polypropylenharzes, **dadurch gekennzeichnet, daß** es kontinuierlich in einem Extruder erfolgt, welches umfaßt:

(i) Mischen des Polypropylenharzes mit einem Peroxid und auch einem Vernetzungsmittel, wobei das Peroxid aus der Gruppe ausgewählt ist, die Strukturen der folgenden Formel (1) umfaßt:

$$R_1\text{-O-O-C(O)=C-C(O)-O-O-}R_2 \qquad (1)$$

worin $R_1$ und $R_2$, die gleich oder verschieden sind, jeweils für lineare verzweigte Alkylgruppen mit 1 bis 15 Kohlenstoffatomen stehen,

(ii) Erwärmen der Bestandteile auf einer Temperatur oberhalb der Schmelztemperatur des Polypropylenharzes und der Zersetzungstemperatur des Peroxids, wobei sie gemischt und vorwärts transportiert werden,

(iii) Halten der Polymerschmelze bei dieser Temperatur für einen Zeitraum von mindestens dem 3- und bis zum 100-fachen der Halbwertszeit des Peroxids bei dieser Temperatur,

(iv) Einführen eines Blähmittels, gegebenenfalls auch eines Blasenerzeugers, in die Polymerschmelze im Inneren der Extrudertrommel an einer Stelle, an der das Verzweigen im wesentlichen abgeschlossen ist,

(v) Extrudieren der verarbeiteten Polymerschmelze durch eine Extrusionsdüse in die umgebende Atmosphäre, worauf sich die Polymerzusammensetzung ausdehnt,

wobei das Verfahren in einer inerten Atmosphäre erfolgt, und
wobei als Vernetzungsmittel eine Verbindung verwendet wird, die aus der Gruppe von Tri(alkylallyl)cyanuraten oder Tri(alkylallyl)isocyanuraten ausgewählt ist.

**3.** Verfahren nach Anspruch 1 oder 2, **dadurch gekennzeichnet, daß** das Polypropylenharz aus der Gruppe ausgewählt ist, welche umfaßt: Polypropylenhomopolymere; Copolymere von Propylen mit 0,1 bis 25 Gew.-% Ethylen; Gemische von Propylenhomopolymeren oder -copolymeren mit Polyethylen hoher Dichte, Polyethylen niedriger Dichte, linearem Polyethylen niedriger Dichte oder Ethylenpropylen-Kautschuken; und Legierungen von Propylenhomopolymeren und -copolymeren mit anderen thermoplastischen Polymeren, die aus der Gruppe von Polyamid und thermoplastischen Polyesterharzen ausgewählt sind; wobei die Menge des zweiten Polymers in den Gemischen oder Legierungen im Bereich von 0,1 bis 40 Gew.-% der Polymerzusammensetzung liegt.

**4.** Verfahren nach Anspruch 1 oder 2, **dadurch gekennzeichnet, daß** die Verweilzeit des Polymerharzes im Inneren des Extruders das 3- bis 50-fache der Halbwertzeit des Peroxids bei der tatsächlichen Schmelztemperatur beträgt.

**5.** Verfahren nach Anspruch 1, 2 oder 3, **dadurch gekennzeichnet, daß** eine Peroxidmenge im Bereich von 0,001 bis 10 %, bezogen auf das Gewicht des Polypropylenharzes, verwendet wird.

**6.** Verfahren nach einem der Ansprüche 2 bis 5, **dadurch gekennzeichnet, daß** das Peroxid tert.-Butylperoxy-n-butylfumarat ist.

**7.** Verfahren nach Anspruch 6, **dadurch gekennzeichnet, daß** eine Menge des Vernetzungsmittels im Bereich von 0,01 bis 10 %, auf das Gewicht des Polypropylenharzes bezogen, verwendet wird.

**8.** Verfahren nach Anspruch 2, **dadurch gekennzeichnet, daß** das Blähmittel aus der Gruppe ausgewählt ist, die physikalische und chemische Blähmittel und Gemische davon umfaßt.

**9.** Verfahren nach Anspruch 8, **dadurch gekennzeichnet, daß** das Blähmittel aus der Gruppe ausgewählt ist, die Kohlendioxid, Alkane mit 1 bis 5 Kohlenstoffatomen, Stickstoff, Wasser und Fluorchlorkohlenstoffe und Gemische davon umfaßt.

**10.** Verfahren nach Anspruch 9, **dadurch gekennzeichnet, daß** das Blähmittel $CO_2$ oder Isobutan ist.

**11.** Verfahren nach den Ansprüchen 2 bis 10, **dadurch gekennzeichnet, daß** der Blasenerzeuger aus der Gruppe ausgewählt ist, die anorganische Carbonate, Citronensäure und Azodicarbonamide und Gemische davon umfaßt.

**12.** Verwendung der Polymerharze, die nach dem Verfahren nach einem der Ansprüche 1 und 3 bis 6 erhalten wurden, bei der Herstellung von Gegenständen durch Spritzgießen, Extrusionsbeschichten, Rohrextrusion, Warmformen, Blasformen, Kalandrieren und Faserspinnen.

**13.** Verwendung der Polymerharze, die nach dem Verfahren der Ansprüche 2 bis 11 erhalten wurden, bei der Herstellung von Gegenständen durch Rohrextrusion, Warmformen und Blasformen.

**Revendications**

**1.** Procédé pour effectuer la ramification d'une résine de polypropylène, **caractérisé en ce qu'**il est réalisé en continu dans une extrudeuse, comprenant les étapes consistant à :

(i) mélanger la résine de polypropylène à un peroxyde et, également, à un agent de réticulation, le peroxyde en question étant choisi parmi les structures représentées par la formule (1) suivante :

$$R_1\text{-O-O-C(O)-C=C-C(O)-O-O-}R_2 \qquad (1)$$

dans laquelle chaque radical $R_1$ et $R_2$, identique ou différent, représente des groupements alkyle linéaires ou ramifiés ayant 1 à 15 atomes de carbone,
(ii) chauffer les constituants à une température supérieure à la température de fusion de la résine de polypropylène et à la température de décomposition du peroxyde, tout en assurant le mélange et le transport,
(iii) maintenir la masse fondue polymère à ladite température sur une période de temps correspondant à au moins 3 fois et jusqu'à 100 fois la demi-vie du peroxyde à ladite température,
(iv) extruder la masse fondue polymère ayant réagi à travers une filière d'extrusion dans l'atmosphère ambiante,

dans lequel le procédé est mis en oeuvre dans une atmosphère inerte, et
dans lequel on utilise, comme agent de réticulation, un composé choisi parmi des cyanurates de tri(alkylallyle) ou des isocyanurates de tri(alkylallyle).

**2.** Procédé pour effectuer la ramification et l'expansion d'une résine de polypropylène, **caractérisé en ce qu'**il est réalisé en continu dans une extrudeuse, comprenant les étapes consistant à :

(i) mélanger la résine de polypropylène à un peroxyde et, également, à un agent de réticulation, lequel peroxyde est choisi parmi les structures représentées par la formule (1) suivante et ses mélanges :

$$R_1\text{-O-O-C(O)=C-C(O)-O-O-}R_2 \qquad (1)$$

dans laquelle chaque radical $R_1$ et $R_2$, identique ou différent, représente des groupements alkyle linéaires ou ramifiés ayant 1 à 15 atomes de carbone,
(ii) chauffer les constituants à une température supérieure à la température de fusion de la résine de polypropylène et à la température de décomposition du peroxyde, tout en effectuant le mélange et le transport,
(iii) maintenir la masse fondue polymère à ladite température sur une période de temps correspondant à au moins 3 fois et jusqu'à 100 fois la demi-vie du peroxyde à ladite température,
(iv) introduire un agent d'expansion, de même que, éventuellement, un initiateur de bulles dans la masse fondue polymère à l'intérieur du cylindre de l'extrudeuse à une position où la ramification est sensiblement complète,
(v) extruder la masse fondue polymère traitée à travers une filière d'extrusion dans une atmosphère ambiante, ce qui se traduit par l'expansion de la composition polymère,

dans lequel le procédé est mis en oeuvre dans une atmosphère inerte, et
dans lequel on utilise, comme agent de réticulation, un composé choisi parmi des cyanurates de tri(alkylallyle) ou des isocyanurates de tri(alkylallyle).

**3.** Procédé selon la revendication 1 ou 2, **caractérisé en ce que** la résine de polypropylène est choisie dans le groupe constitué d'homopolymères de polypropylène ; de copolymères de propylène avec 0,1 % à 25 % en poids d'éthylène ; de mélanges d'homopolymères ou de copolymères de propylène avec du polyéthylène de haute densité, du polyéthylène de faible densité, du polyéthylène de faible densité linéaire ou des caoutchoucs d'éthylène-propylène ; et d'alliages d'homopolymères et de copolymères de propylène avec d'autres polymères thermoplastiques choisis dans le groupe constitué des résines de polyamide et de polyester thermoplastiques ; dans lequel le taux du second polymère dans les mélanges ou dans les alliages se situe dans la plage de 0,1 à 40 % en poids de la composition polymère.

**4.** Procédé selon la revendication 1 ou 2, **caractérisé en ce que** le temps de séjour de la résine polymère à l'intérieur de l'extrudeuse représente 3 à 50 fois la demi-vie du peroxyde à la température de fusion réelle.

**5.** Procédé selon les revendications 1, 2 ou 3, **caractérisé en ce que** l'on utilise une quantité de peroxyde dans la plage de 0,001 % à 10 % par rapport au poids de la résine de polypropylène.

**6.** Procédé selon l'une quelconque des revendications 2 à 5, **caractérisé en ce que** le peroxyde est le peroxy-n-butylfumarate de tert-butyle.

**7.** Procédé selon la revendication 6, **caractérisé en ce que** l'on utilise une quantité d'agent de réticulation dans la plage de 0,01 % à 10 % par rapport au poids de la résine de polypropylène.

**8.** Procédé selon la revendication 2, **caractérisé en ce que** l'agent d'expansion est choisi parmi des agents d'expansion physiques et chimiques, et des mélanges de ceux-ci.

**9.** Procédé selon la revendication 8, **caractérisé en ce que** l'agent d'expansion est choisi dans le groupe constitué du dioxyde de carbone, d'alcanes ayant 1 à 5 atomes de carbone, de l'azote, de l'eau et de chloro-fluorocarbones, ainsi que des mélanges de ceux-ci.

**10.** Procédé selon la revendication 9, **caractérisé en ce que** l'agent d'expansion est le $CO_2$ ou l'isobutane.

**11.** Procédé selon les revendications 2 à 10, **caractérisé en ce que** l'initiateur de bulles est choisi dans le groupe constitué des carbonates inorganiques, de l'acide citrique et des azodicarbonamides, ainsi que leurs mélanges.

**12.** Utilisation des résines polymères obtenues par le procédé selon l'une quelconque des revendications 1 et 3 à 6, dans la fabrication d'articles selon les techniques de moulage par injection, de revêtement par extrusion, d'extrusion de tubes, de thermoformage, de moulage par soufflage, de calandrage et de filage de fibres.

**13.** Utilisation des résines polymères obtenues par le procédé selon les revendications 2 à 11, dans la fabrication d'articles selon les techniques d'extrusion de tubes, de thermoformage et de moulage par soufflage.

**EP 1 159 309 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5047485 A
- WO 9405707 A
- GB 1566056 A
- US 5082869 A